# EUROPEAN PATENT SPECIFICATION

(11) **EP 3 597 539 B1**
(45) Date of publication and mention of the grant of the patent: **28.12.2022**
(21) Application number: 18400024.8
(22) Date of filing: 17.07.2018
(51) Int. Cl.: B64C 27/68

(54) **A ROTOR WITH PITCH CONTROL APPARATUS**
ROTOR MIT BLATTVERSTELLUNGSVORRICHTUNG
ROTOR À APPAREIL DE COMMANDE DE PAS

(43) Date of publication of application: 22.01.2020
(73) Proprietor: AIRBUS HELICOPTERS DEUTSCHLAND GmbH, 86609 Donauwörth (DE)
(72) Inventor: Ries, Tobias, 86695 Nordendorf (DE)
(74) Representative: GPI & Associés

(56) References cited:
- EP-B1- 2 821 344
- WO-A2-02/070094
- FR-A1- 2 851 932
- GB-A- 2 388 095
- US-A- 4 648 345
- US-A- 5 967 749

## Description

The invention is related to a rotor, and, more particularly, to a pitch control apparatus for controlling pitching of the rotor blades of a rotor.

Generally, rotating thrust systems with blades are controlled by a variable pitch control system for eliminating problems caused by high torque moments and low thrust change rates. Exemplarily, a main rotor of a helicopter allows vertical starting and landing of the helicopter without need for horizontal propulsion. By turning the main rotor of the helicopter, a torque opposite to the direction of rotation is generated and performs a rotational movement. In order to control movements of the aircraft, it is necessary to compensate the rotational movement generated by the torque of the main rotor.

For this purpose, a separate tail rotor is often used to generate a thrust against the torque. Such a tail rotor usually has a plurality of rotor blades that are integrated in a housing of a tail boom to reduce the risk of injury. In recent years, at least portions of the tail rotor are driven by electric motors.

Documents US 2017/0174355 A1, DE 10 2008 057 715 A1, and US 2010/0123039 A1 describe a redundant electric drive for a tail rotor, in which a plurality of drive units is arranged on the rotor axis and can be controlled separately. If one of the drive units fails on the rotor axis, then at least the remaining ones continue driving further. However, the drive units are installed close to each other in such a way that all drive units would be affected in case of a serious accident on the rotor axis.

The thrust produced by the rotor blades of a tail rotor can be controlled in two different ways: either by controlling the rotation speed of the rotor blades around the rotor axis, or by controlling an aerodynamic lift coefficient of the rotor blades. The aerodynamic lift coefficient is usually controlled by adjusting an underlying pitch angle of the rotor blades.

Recently, several pitch control apparatuses have emerged that electrically control the pitch angle adjustment of tail rotor blades. In such a pitch control apparatus, electromagnetic poles are arranged on the circumference of the tail rotor. These electromagnetic poles work together with magnets on the rotor blades to adjust the pitch angle of the rotor blades.

Document EP 2 821 344 B1 describes a rotor drive system, particularly a rotor drive system of a tail rotor of a helicopter, comprising a stator and a rotor. In that system, the rotor is described as being mounted to the stator with a rotatable central carrier and rotor blades radially attached to the rotatable central carrier. Each rotor blade is pivotable about its respective radial central axis in order to achieve variation of blade pitch. Along at least one blade radius, at least one permanent magnet is provided on each rotor blade and a plurality of electromagnets on the stator are provided coaxially on at least one stator radius close enough to said at least one blade radius to allow inductive interaction between the plurality of electromagnets and the at least one permanent magnet on each rotor blade. The permanent magnets are described as being fixed to the rotor blades offset from the radial central axis in a direction perpendicular to the rotation plane in order to achieve individual pitch control of the rotor blades by individual control of the electromagnets connected to electric supply means.

However, one magnet on the blade tips is often not enough to generate the required torque for changing the pitch angle of the rotor blade. Moreover, the total number of magnets in the motor is usually too low to provide the required torque and power to enable a pitch angle change. Therefore, more magnet pairs than the number of blades are usually required to solve the presented problems and to ensure efficient functionality of the rotor system.

Nevertheless, it is not simply possible to add more magnets in circumferential direction on the tail rotors, because the use of multiple magnets per blade in combination with cylindrical surfaces and pitch change may geometrically lead to the need for big gaps between the magnet surfaces. In that case, a change of the pitch angle of a rotor blade could lead to a strong weakening of the magnetic field interaction between the magnets connected to the blade and the electric magnets in the non-rotating frame on the hub. In other words, the geometric distance between the additional magnets and the electric magnets would be so large that the pitch control apparatus would become unreliable and/or inefficient.

In addition, the magnetic field between the electromagnets and the rotor magnet elements would not be constant during pitching and rotating.

Based on the limitations and drawbacks of the prior art, an objective is to provide a rotor with a pitch control apparatus in which the arrangement of the permanent magnets on the rotor blades and the electric magnets ensures the efficient adjustment of the pitch angle of the rotor blades based on an essentially constant magnetic field. More specifically, the objective is to provide a rotor with at least two rotor blades and an electrically operated pitch control apparatus which exhibits at least one individual magnet pair per blade having a configuration that forms a gap between the rotor and a stator that is constant during pitch angle change. The documents US7134840, FR2851932, US5967749, US4648345, WO02070094 and GB2388095 are known.

This objective is solved by a rotor comprising the features of claim 1.

More specifically, a rotor comprises at least two rotor blades and a pitch control apparatus for controlling the pitching of the at least two rotor blades. Each rotor blade of the at least two rotor blades rotates around a rotor axis and performs pitching around a pitch axis. The rotor axis and the pitch axis intersect in a rotor center. Each rotor blade comprises at least one permanent magnet having a first spherical magnet surface. The pitch control apparatus comprises electrically controlled magnets having a second spherical magnet surface.

According to one example, a first distance from the rotor axis and a second distance from the pitch axis define a first predetermined radius. A third distance from the rotor axis and a fourth distance from the pitch axis define a second predetermined radius. The first spherical magnet surface is at the first predetermined radius from the rotor center, and the second spherical magnet surface is at the second predetermined radius from the rotor center.

According to one example, the second and fourth distances are selected based on a predetermined pitch torque requirement for each rotor blade of the at least two rotor blades during pitching.

According to one example, the first and third distances are selected based on a predetermined drive torque requirement for driving the rotor.

According to one example, the first predetermined radius is greater than the second predetermined radius.

According to one example, the second predetermined radius is greater than the first predetermined radius.

The at least one permanent magnet and the electrically controlled magnets are arranged opposing each other and form a constant gap between the first and second spherical magnet surfaces during pitching. According to one example, the gap is defined by an absolute value of a difference between the first and second predetermined radii.

According to one example, the constant gap between the first and second spherical magnet surfaces ensures an overlapping magnetic field between the at least one permanent magnet and the electrically controlled magnets.

According to one example, the electrically controlled magnets control the pitching of each rotor blade of the at least two rotor blades individually.

According to one example, the at least two rotor blades rotate in a rotor plane and each rotor blade of the at least two rotor blades comprises at least one first permanent magnet of the at least one permanent magnet on a first side of the rotor plane and at least one second permanent magnet of the at least one permanent magnet on a second side of the rotor plane that is opposite to the first side of the rotor plane.

According to one example, the at least one first permanent magnet and the at least one second permanent magnet are installed on a magnet support around the rotor center on each side of the at least two rotor blades and move with the at least two rotor blades around the pitch axis during pitching.

According to one example, the at least one permanent magnet of each rotor blade overlaps with at least a portion of the electrically controlled magnets in an overlap area, wherein the overlap area is constant during pitching of each rotor blade of the at least two rotor blades.

According to one example, the at least one permanent magnet has an hourglass cross-section shape. The hourglass cross-section shape of the at least one permanent magnet has a middle section width and an outer section width that is greater than the middle section width. The middle section width is based on the width of the electrically controlled magnets and the outer section width is based on a maximum movement of the at least one permanent magnet during pitching.

According to one example, the at least one permanent magnet has a trapezoidal cross-section shape wherein the trapezoidal cross-section shape of the at least one permanent magnet has a first outer section width and a second outer section width that is greater than the first outer section width.

According to one example, the rotor further comprises a rotor hub having an outer circular wall and a central blade mount that receives the at least two rotor blades, wherein the electrically controlled magnets are arranged on the outer circular wall.

According to one example, the outer circular wall provides a static, non-rotating magnet support.

According to an embodiment, a rotorcraft may include at least one rotor as described above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative rotorcraft with a ducted tail rotor, including an enlarged perspective view of the ducted tail rotor in accordance with some embodiments,
- Figure 2 is a diagram of an illustrative ducted tail rotor with a rotor hub in accordance with some embodiments,
- Figure 3 is a diagram of an illustrative rotor hub and a central blade mount with a pitch control apparatus having electrically controlled magnets installed on a rotating surface in accordance with some embodiments,
- Figure 4A is a diagram of an illustrative rotor hub with a pitch control apparatus having electrically controlled magnets installed on a non-rotating surface in accordance with some embodiments,
- Figure 4B is a diagram of an illustrative non-rotating magnet support with electrically controlled magnets in accordance with some embodiments,
- Figure 5A is a diagram of an illustrative partial cut plan view of a pitch control apparatus in accordance with some embodiments,
- Figure 5B is a diagram of an illustrative plan view of a pitch control apparatus that interacts with permanent magnets in a rotor in accordance with some embodiments,
- Figure 5C is a diagram of an illustrative perspective view of a rotor blade with a pitch control apparatus that allows for a permanent magnet to be arranged on a magnet support around the rotor center on the rotor blade in accordance with some embodiments,
- Figure 5D is a diagram of an illustrative hourglass cross-section shape of a permanent magnet in accordance with some embodiments,
- Figure 6A is a diagram of an illustrative partial cut plan view of a pitch control apparatus during pitching in accordance with some embodiments,
- Figure 6B is a diagram of an illustrative plan view of a pitch control apparatus during pitching in accordance with some embodiments,
- Figure 6C is a diagram of an illustrative perspective view of a pitch control apparatus and a rotor blade during pitching in accordance with some embodiments,
- Figure 6D is a diagram of an illustrative trapezoidal cross-section shape of a permanent magnet in accordance with some embodiments,
- Figure 7 is a diagram of an illustrative rotor with a pitch control apparatus that includes magnets with first and second spherical surfaces in accordance with some embodiments,
- Figure 8A is a diagram of an illustrative sectional view of a rotor with a pitch control apparatus in that electrically controlled magnets are arranged on the inner surface of the outer circular wall of a rotor hub in accordance with some embodiments,
- Figure 8B is a diagram of an illustrative rotor with a pitch control apparatus in that electrically controlled magnets are arranged on the outer surface of the outer circular wall of a rotor hub in accordance with some embodiments, and
- Figure 9 is a diagram of an illustrative sectional view of a rotor with a pitch control apparatus in accordance with some embodiments.

Exemplary embodiments may be included in any rotor or propeller such as a rotor or propeller of a transportation vehicle, if desired.

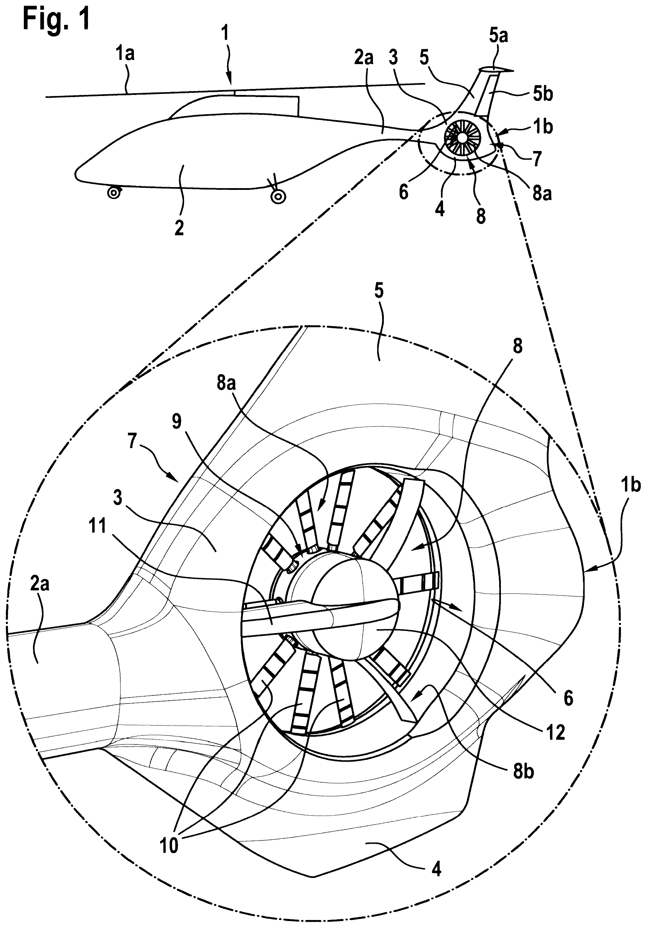

Figure 1 shows an example of a transportation vehicle. A transportation vehicle may be an airplane, a multicopter, a helicopter, or any other rotary wing transportation vehicle. As shown in Figure 1, the transportation vehicle may be a rotorcraft 1 that is exemplarily illustrated as a helicopter. Thus, for purposes of simplicity and clarity, the rotorcraft 1 is hereinafter referred to as the "helicopter" 1. As shown, helicopter 1 may include a fuselage 2 that includes a tail boom 2a.

Helicopter 1 includes at least one main rotor 1a that is configured to provide lift and forward thrust during operation, and at least one counter-torque device 8 that is configured to provide counter-torque during operation, i. e. to counter the torque created by rotation of the at least one main rotor 1a for purposes of balancing helicopter 1 in terms of yaw.

At least one counter-torque device 8 is illustratively provided at aft section 1b of tail boom 2a, which may include at least one duct-type tail portion 7. By way of example, aft section 1b further includes bumper 4 and fin 5 in the form of a T-tail having tail wing 5a and rudder 5b. Tail wing 5a may be adjustable in its inclination and can overtake the functioning of a horizontal stabilizer. Alternatively, or in addition, helicopter 1 is provided with a suitable horizontal stabilizer. Rudder 5b may be adapted to provide for enhanced directional control of helicopter 1 and can be deflected to large angles to reduce a given lateral drag of fin 5 in sideward flight.

Duct-type tail portion 7 is provided with a shroud 3 that defines at least one transverse duct 6 having an at least approximate circular or annular cross-section, and at least one counter-torque rotor 8a that is arranged rotatably. At least one transverse duct 6 illustratively extends through the shroud 3. Furthermore, at least one counter-torque stator 8b is fixedly arranged inside the at least one transverse duct 6 in order to support at least one counter-torque rotor 8a rotatably. Counter-torque rotor 8a, counter-torque stator 8b and shroud 3, i. e. transverse duct 6, illustratively define at least one counter-torque device 8 of helicopter 1, which is embodied in the form of a ducted tail rotor and, more specifically, in the form of a Fenestron^{®} tail rotor. Accordingly, for simplicity and clarity, counter-torque device 8 and, in particular, counter-torque rotor 8a is hereinafter also referered to as the "ducted tail rotor".

At least one ducted tail rotor 8a illustratively includes rotor hub 9 having a rotor axis, and at least two rotor blades 10 that are attached to rotor hub 9 and rotate around the rotor axis in operation.

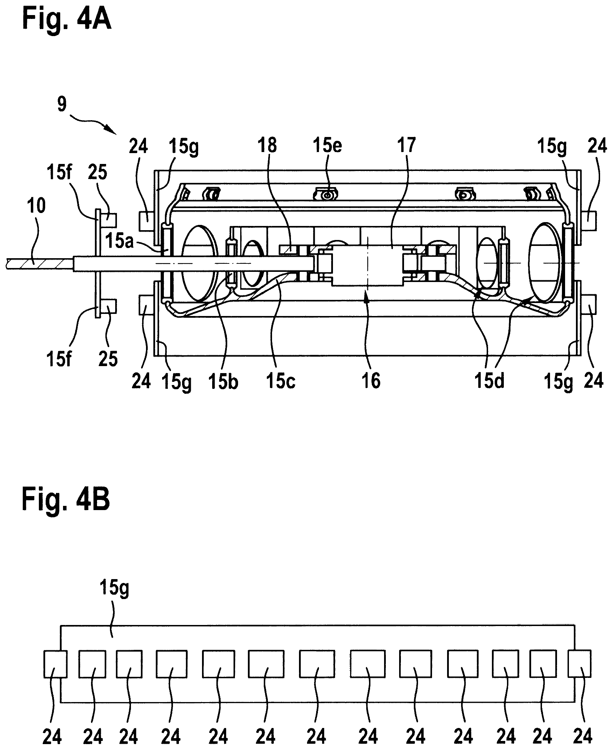

In unclaimed examples, the at least one ducted tail rotor 8a may include one or more magnet supports such as magnet supports 15f of Figure 4 on each rotor blade 10. The one or more magnet supports on each rotor blade may be equipped with permanent magnets that have a spherical magnet surface.

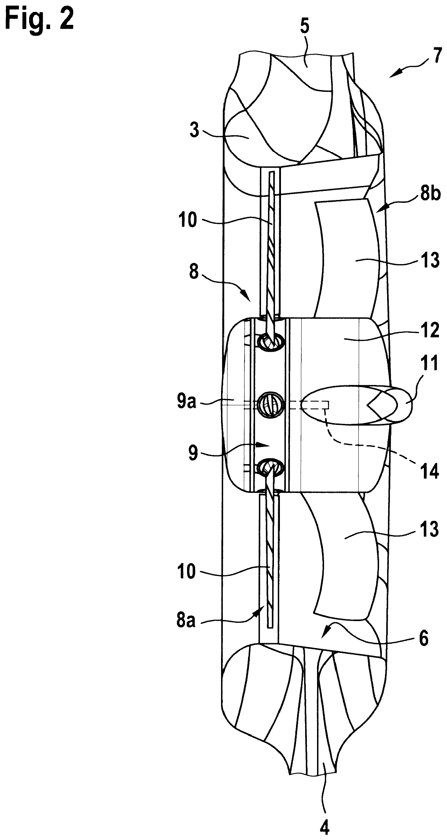

If desired, a static, non-rotating magnet support such as non-rotating magnet support 15g of Figure 4 may be arranged on each side of the rotor blades 10 in a plane that is perpendicular to the rotor axis. For example, a static, non-rotating magnet support may be attached to a non-rotatable part of the at least one ducted tail rotor 8a, e.g. to counter-torque stator 8b or to stator vanes such as stator vanes 13 of Figure 2. The static, non-rotating magnet support may be equipped with electrically controlled magnets that have a spherical magnet surface.

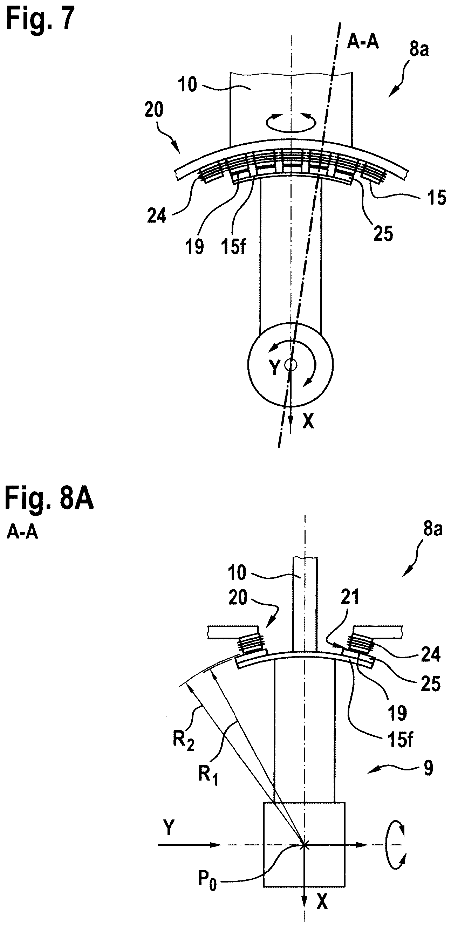

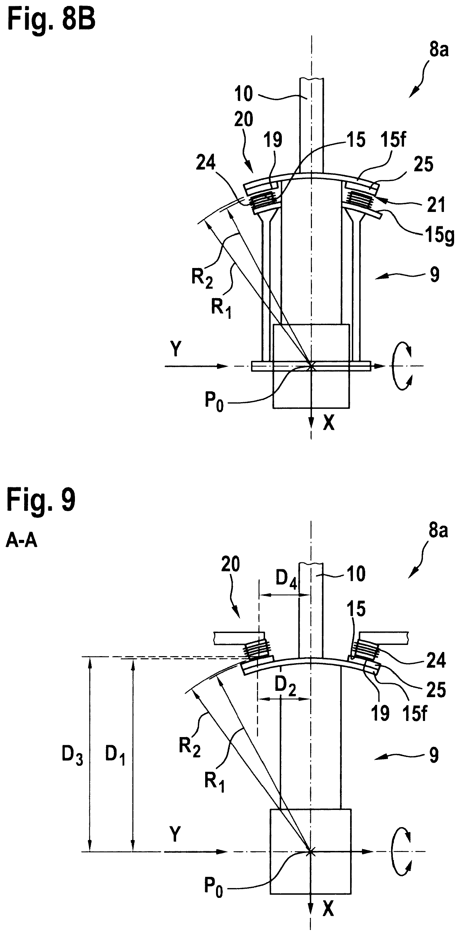

The spherical magnet surfaces of the permanent magnets and the electrically controlled magnets may have the same center point (e.g., as shown in Figure 9) and may be arranged close enough to each other to allow inductive interaction between the electrically controlled magnets and the permanent magnets. Thereby, the electrically controlled magnets may accelerate or decelerate the rotational movement of rotor blades 10 around the rotor axis and/or adjust the pitch angle of rotor blades 10 (e.g., by pitching around a pitch axis such as pitch axis X of Figure 7).

An electromotor, a piston engine, a gas turbine, any combination thereof, or any other torque generating device may drive tail rotor 8a. In some embodiments, an electromotor may drive tail rotor 8a, while the inductive interaction between the electrically controlled magnets and the permanent magnets adjust the pitch angle of the rotor blades as described in the previous paragraph. The electromotor may be located inside a fairing and accelerate and decelerate the at least two rotor blades 10 using a drive shaft such as drive shaft 14 of Figure 2.

As shown, at least one counter-torque stator 8b illustratively includes drive shaft fairing 11 that is fixedly arranged inside at least one transverse duct 6 and connects gearbox fairing 12 to shroud 3. Drive shaft fairing 11 may be adapted to receive a power transmission shaft of at least one ducted tail rotor 8a. Gearbox fairing 12 is further connected to shroud 3 by means of associated stator vanes (13 in Figure 2). If desired, gearbox fairing 12 is adapted to receive a rotor drive transmission of at least one ducted tail rotor 8a and can further be adapted to receive pitch variation mechanisms for at least two rotor blades 10. If desired, the inductive interaction between the electrically controlled magnets and the permanent magnets may adjust the pitch angle of the rotor blades as described above.

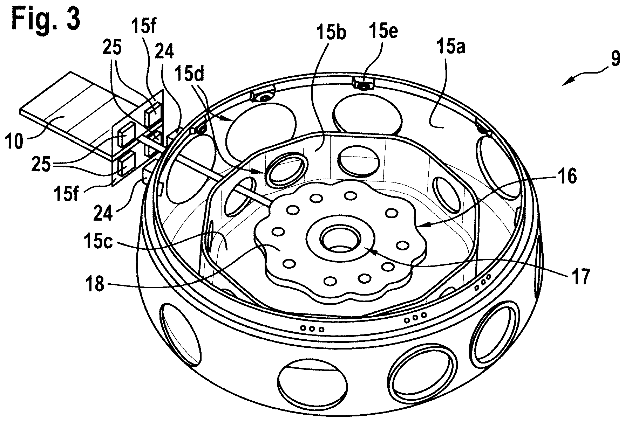

In unclaimed examples, the at least one ducted tail rotor 8a may lack a static, non-rotating magnet support, and a rotating magnet support such as rotating outer circular wall 15a of Figure 3 instead of a static, non-rotating magnet support may be equipped with electrically controlled magnets. The electrically controlled magnets have an appropriately formed spherical magnet surface. If desired, the permanent magnets may have a spherical, or any other appropriately formed magnet surface.

In some embodiments, the surface shape of the permanent magnets may mirror the surface shape of the electrically controlled magnets. For example, the electrically controlled magnets and the permanent magnets both have a spherical magnet surface. As another example, one of the electrically controlled magnets or the permanent magnets may have a convex spherical surface, while the other one of the electrically controlled magnets or the permanent magnets may have a concave spherical surface and vice versa.

However, for the remainder of this description and in an effort to simplify discussion, it is considered that the electrically controlled magnets and the permanent magnets have spherical magnet surfaces. Nevertheless, electrically controlled magnets and permanent magnets with spherical surfaces are considered to be part of the invention.

The spherical magnet surfaces of the permanent magnets on the one or more magnet supports of each rotor blade and the electrically controlled magnets may have the same center point (e.g., as shown in Figure 9) and may be arranged close enough to each other to allow inductive interaction between the electrically controlled magnets and the permanent magnets. Since the rotating magnet support may rotate with rotor blades 10, the rotating magnet support may be equipped with electrically controlled magnets only at locations that are opposite permanent magnets. Thereby, the electrically controlled magnets may adjust the pitch angle of rotor blades 10 (e.g., by pitching around a pitch axis such as pitch axis X of Figure 7).

Figure 2 illustratively shows duct-type tail portion 7 with at least one ducted tail rotor 8a and at least one counter-torque stator 8b, which are arranged in at least one transverse duct 6 of shroud 3. At least one ducted tail rotor 8a may be arranged in close proximity to at least one counter-torque stator 8b and, more specifically, upstream to at least one counter-torque stator 8b with respect to an air flow generated by ducted tail rotor 8a in operation.

At least one ducted tail rotor 8a includes at least two rotor blades 10 and rotor hub 9, which is illustratively covered by hub cover 9a. At least one counter-torque stator 8b includes drive shaft fairing 11 that is fixedly arranged inside at least one transverse duct 6 and connects gearbox fairing 12 to shroud 3. Gearbox fairing 12 is connected to shroud 3 by means of associated stator vanes 13.

According to one example, ducted tail rotor 8a is driven in operation by means of associated tail rotor drive shaft 14, which may drivingly couple rotor hub 9 of ducted tail rotor 8a to associated tail gearbox, e. g., via a rotor drive transmission that is accommodated to gearbox fairing 12, as described above in Figure 1. Rotor hub 9 may be adapted for supporting at least two rotor blades 10, which are, thus, drivable by means of associated tail rotor drive shaft 14.

In some embodiments, electrically controlled magnets arranged on a static non-rotating surface may inductively interact with permanent magnets on magnet supports on each of the at least two rotor blades 10 to drive the at least two rotor blades 10.

In some embodiments, electrically controlled magnets arranged on a static non-rotating surface may inductively interact with permanent magnets on magnet supports on each of the at least two rotor blades 10 to adjust the pitch angle of the respective rotor blade. If desired, the tail gearbox may drive the tail rotor 8a through tail rotor drive shaft 14, and electrically controlled magnets may be used as power generators.

In some embodiments, an electrical motor instead of the tail gearbox may drive tail rotor drive shaft 14.

Figure 3 illustratively shows rotor hub 9, that is adapted for supporting at least two rotor blades 10, and a central blade mount with a pitch control apparatus having electrically controlled magnets installed on a rotating surface. Each rotor blade 10 of the at least two rotor blades 10 having at least one permanent magnet 25 are drivable by means of a tail rotor drive shaft such as tail rotor drive shaft 14 of Figure 2, e.g. using an electromotor.

According to one example, rotor hub 9 includes rotating outer wall 15a, inner wall 15b, and bottom wall 15c. Rotating outer wall 15a and/or inner wall 15b may be ring-shaped. In some embodiments, rotating outer wall 15a may exhibit a circular profile, respectively, a circular cross-section. If desired, inner wall 15b may exhibit a polygonal profile, respectively, a polygonal cross-section. Bottom wall 15c may connect rotating outer wall 15a to inner wall 15b. If desired, rotating outer wall 15a and/or inner wall 15b may be integrally formed in one piece with bottom wall 15c.

According to some embodiments, bottom wall 15c may be made of fiber reinforced polymers and adapted for being attached to at least two rotor blades 10. Rotating outer wall 15a and/or inner wall 15b and/or entire rotor hub 9 may be made of fiber reinforced polymers, if desired.

In some embodiments, rotating outer wall 15a and/or inner wall 15b and/or entire rotor hub 9 may be made using one or more other fiber reinforced polymers, such as, e.g., glass and/or aramid fiber reinforced polymers.

Rotating outer wall 15a and inner wall 15b may be coaxially arranged and provided with a predetermined number of coaxially aligned, round apertures. By way of example and for simplicity and clarity of the drawings, only two coaxially aligned, round apertures are labelled with the reference number 15d.

Rotating outer wall 15a may further be provided with a plurality of hub cover attachments 15e. Hub cover attachments 15e may be adapted to allow a secure and reliable attachment of hub cover 9a of Figure 2. Thus, hub cover attachments 15e can be implemented by any means that allow implementation of such a secure and reliable attachment.

According to one example, rotor hub 9 is provided with central blade mount 16 that is adapted for being attached to at least two rotor blades 10. Central blade mount 16 may be mounted to a reinforced central portion of bottom wall 15c.

Central blade mount 16 may be provided with central component 17 which is adapted for being drivingly coupled to tail rotor drive shaft 14 of Figure 2.

In some embodiments, central blade mount 16 may include central flange 18. Central flange 18 may be spaced apart from bottom wall 15c, if desired. Each rotor blade 10 may be attached to central flange 18. According to one example, each rotor blade 10 may include at least one permanent magnet 25 arranged on magnet support 15f.

In some embodiments, at least two rotor blades 10 rotating in a rotor plane may each include at least one permanent magnet 25 attached to magnet support 15f on the first side of the rotor plane and/or at least one permanent magnet 25 attached to magnet support 15f on the second side of the rotor plane which is opposite to the first side of the rotor plane. If desired, the at least one permanent magnets 25 may have a spherical surface.

Electrically controlled magnets 24 may be attached to the outside of rotating outer circular wall 15a opposing permanent magnets 25. The spherical magnet surfaces of the permanent magnets 25 on the one or more magnet supports 15f on each rotor blade 10 and electrically controlled magnets 24 may have the same center point (e.g., as shown in Figure 9) and may be arranged close enough to each other to allow inductive interaction between electrically controlled magnets 24 and permanent magnets 25, thereby implementing a pitch control apparatus, in which electrically controlled magnets 24 adjust the pitch angle of rotor blades 10 through inductive interaction with permanent magnets 25 on the rotor blades 10. (e.g., by pitching around a pitch axis such as pitch axis X of Figure 7).

One or more brushes or any other well know technology able to transfer a current from a stationary wire to a moving part may transfer a current to electrically controlled magnets 24 on the outside of rotating outer circular wall 15a. If desired, different segments around the rotor axis may use different brushes that are electrically separated from each other to transfer a current to electrically controlled magnets 24. Thereby, electrically controlled magnets 24 may be controlled based on a current angular position of electrically controlled magnets 24, thereby allowing for cyclic pitch angle adjustments. Brushes are well known in the art. Thus, a detailed description of the brushes can be omitted for brevity and conciseness.

Figure 4A shows an exemplary rotor hub (e.g., rotor hub 9 of Figure 3) that includes non-rotating magnet support 15g, which is equipped with electrically controlled magnets 24, rotating outer wall 15a, inner wall 15b, bottom wall 15c, and central blade mount 16, which may include splined central component 17 and central flange 18. Rotor blades 10 are attached to central flange 18, which may enable pitch motion, but restrict flapping and lead/lag motion of rotor blades 10. Moreover, the reinforced central portion of bottom wall 15c to which central blade mount 16 is mounted, is illustrated.

According to some embodiments, electrically controlled magnets 24 may be arranged on non-rotating magnet support 15g. If desired, non-rotating magnet support 15g may be arranged on each side of the rotor blades 10 in planes that are perpendicular to the rotor axis (e.g., illustrated as rotor axis Y of Figure 7) and above or below the pitch axis (e.g., illustrated as pitch axis X of Figure 7). Non-rotating magnet support 15g may be attached to a non-rotatable part and extend around rotating outer circular wall 15a. As an example, non-rotating magnet support 15g may be attached to counter-torque stator 8b of rotorcraft 1 of Figure 1 or to stator vanes 13 of Figure 2. Non-rotating magnet support 15g may be equipped with electrically controlled magnets 24 that have a spherical magnet surface.

If desired, permanent magnets 25 may be arranged on magnet support 15f of rotor blade 10 opposite electrically controlled magnets 24. Permanent magnets 25 may have a spherical magnet surface. The spherical magnet surfaces of permanent magnets 25 and electrically controlled magnets 24 may have the same center point and may be arranged close enough to each other to allow inductive interaction between electrically controlled magnets 24 and permanent magnets 25. Thereby, electrically controlled magnets 24 may accelerate or decelerate the rotational movement of rotor blades 10 around the rotor axis and/or adjust the pitch angle of rotor blades 10 (e.g., by pitching around a pitch axis such as pitch axis X of Figure 7).

Figure 4B is a diagram of an illustrative non-rotating magnet support 15g with electrically controlled magnets 24 in accordance with some embodiments. Non-rotating magnet support 15g may have the shape of a ring. If desired, non-rotating magnet support 15g may be attached to a non-rotating part. As shown in Figure 4B, the whole circumference of non-rotating magnet support 15g may be equipped with electrically controlled magnets 24.

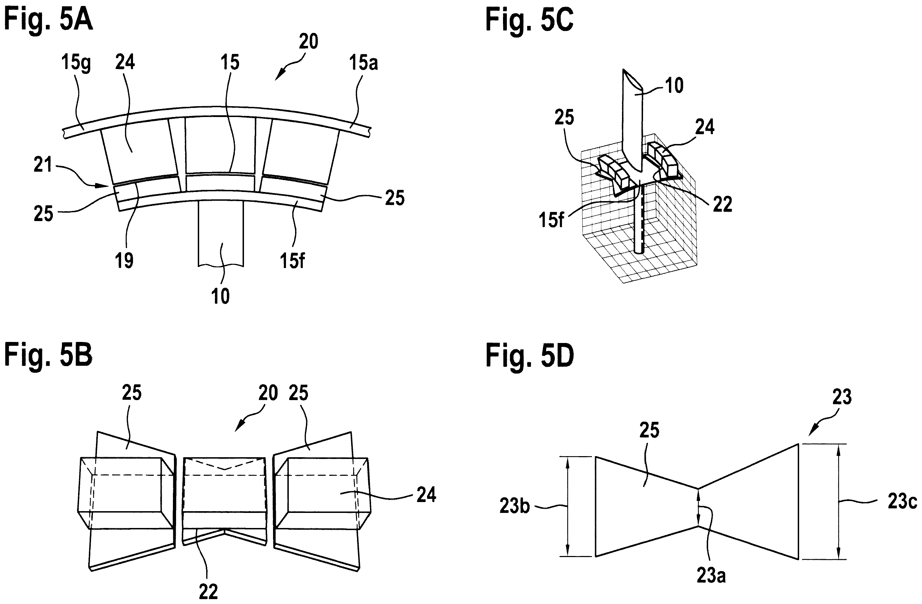

Figure 5A shows an illustrative pitch control apparatus 20 that is arranged opposing permanent magnets 25 having spherical magnet surface 19. Pitch control apparatus 20 may include electrically controlled magnets 24 having spherical magnet surface 15. If desired, spherical magnet surfaces 15 and 19 may have the same spherical center point. Electrically controlled magnets 24 may control and/or adjust the pitching of each rotor blade 10 individually.

Permanent magnets 25 and electrically controlled magnets 24 may form gap 21 between the spherical magnet surfaces 19 and 15 that is constant during pitching, if desired. Flapping and lead/lag motion of rotor blade 10 are movements, which are not concentric and therefore may change gap 21 despite the spherical magnet surfaces 19 and 15. Thus, gap 21 may be selected based on flapping and lead/lag motion of rotor blade 10.

According to one example, it may be desirable to control the distance between first and second spherical magnet surfaces 19, 15 illustrated by gap 21. For example, gap 21 may be selected to be small enough for the efficiency and operability of an electrical motor. The importance for controlling gap 21 between permanent magnet 25 and electrically controlled magnet 24 pairs may increase with increased first and second spherical magnet surfaces 19, 15. In scenarios in which the first and second spherical magnet surfaces 19, 15 have opposing spherical shapes and share the same spherical center point, gap 21 may be minimized regardless of the pitch motion, and gap 21 between permanent magnets 25 and electrically controlled magnets 24 may remain constant during pitching.

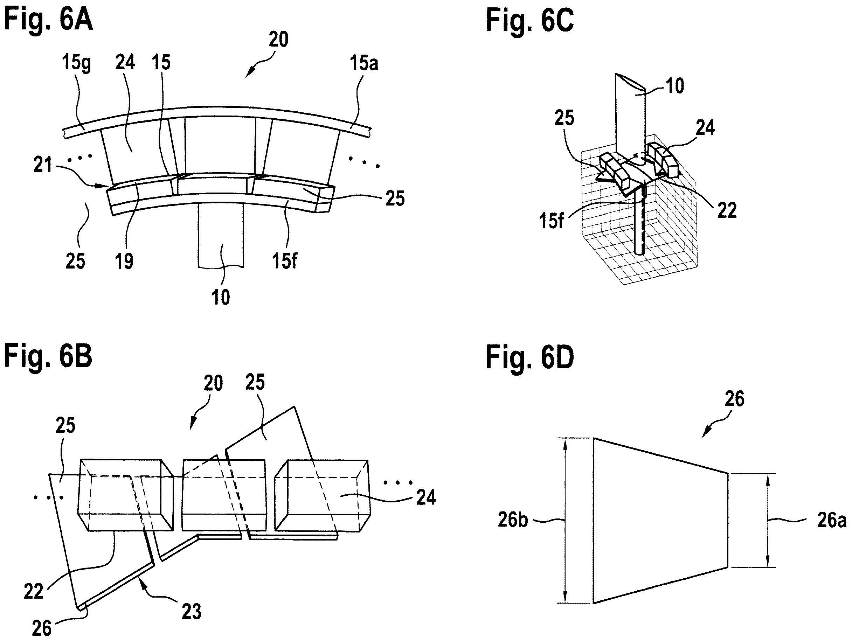

Figure 5B illustrates a plan view of pitch control apparatus 20 that interacts with permanent magnets 25. According to Figure 5B, three permanent magnets 25 may overlap with three electrically controlled magnets 24 in overlap area 22. Overlap area 22 may be defined by an overlap shape between electrically controlled magnets 24 and permanent magnets 25. If desired, permanent magnets 25 and/or electrically controlled magnets 24 may be selected to have a respective shape such that overlap area 22 is constant during pitching of each rotor blade 10. For example, all electrically controlled magnets 24 may be selected to have a rectangular shape, while the permanent magnet at the central position has an hourglass cross-section shape such as hourglass cross-section shape 23 of Figure 5D and the permanent magnets left and right of the central position have a trapezoidal cross-section such as trapezoidal cross-section shape 26 of Figure 6D.

Figure 5C illustrates permanent magnets 25 that are arranged opposing electrically controlled magnets 24 on rotor blade 10. As shown in Figure 5C, permanent magnets 25 on each side of the rotor plane are installed on a magnet support 15f around the rotor center on each side of rotor blade 10. The shape of permanent magnets 25 may be defined by the shape of overlap area 22 between electrically controlled magnets 24 and permanent magnets 25.

According to one example, a part of overlap area 22 is defined as an hourglass shape that defines cross-section shape 23 of permanent magnet 25. Figure 5D illustrates hourglass cross-section shape 23 of permanent magnet 25 having middle section width 23a and outer section widths 23b, 23c that are both greater than middle section width 23a. Middle section width 23a of hourglass cross-section shape 23 may be selected based on the width of electrically controlled magnets, such as electrically controlled magnets 24 of Figures 5A or 5B. Outer section width 23b, 23c may be selected based on the maximum movement of permanent magnet 25 during pitching so that permanent magnet 25 overlaps with an opposing electrically controlled magnet 24.

If desired, hourglass cross-section shape 23 including middle section width 23a and/or outer section widths 23b, 23c may be selected based on the maximum pitch angle, the shape and/or size of electrically controlled magnets 24, the position of both magnets 24, 25 relative to pitch axis X or any deformations of the rotor blades other than the ones caused by the pitch angle adjustment, e.g., deformations caused by flapping or lead/lag moments.

In some embodiments, outer section widths 23b and 23c of hourglass cross-section shape 23 may have different sizes depending on overlap area 22 between permanent magnets 25 and electrically controlled magnets 24 during pitching.

In some embodiments, outer section widths 23b and 23c of hourglass cross-section shape 23 may have the same size depending on overlap area 22 between permanent magnets 25 and electrically controlled magnets 24 during pitching.

Figures 6A, 6B, and 6C show an illustrative pitch control apparatus 20 during pitching.

Figure 6A shows an illustrative pitch control apparatus 20 during pitching, whereby pitch control apparatus 20 is arranged opposing permanent magnets 25 with spherical magnet surface 19. Pitch control apparatus 20 may include electrically controlled magnets 24 having spherical magnet surface 15. If desired, spherical magnet surfaces 15 and 19 may have the same spherical center point. Electrically controlled magnets 24 may control and/or adjust the pitching of each rotor blade 10 individually. Permanent magnets 25 and electrically controlled magnets 24 may form gap 21 between the spherical magnet surfaces 19, 15 that is constant during pitching, if desired.

Figure 6B illustrates a plan view of pitch control apparatus 20 that interacts with permanent magnets 25 during pitching. According to Figure 6B, three permanent magnets 25 may overlap with three electrically controlled magnets 24 in overlap area 22. Overlap area 22 is defined by an overlap shape between electrically controlled magnets 24 and permanent magnets 25. If desired, the permanent magnets 25 and/or the electrically controlled magnets 24 may be selected to have a respective shape such that overlap area 22 is constant during pitching of each rotor blade 10. For example, all electrically controlled magnets 24 may be selected to have a polygonal shape such as a rectangular shape, a pentagonal shape, a hexagonal shape, etc. If desired, electrically controlled magnets 24 may have a round shape, an oval shape, an elliptical shape, etc. Permanent magnet 25 at the central position may have an hourglass shape, and the permanent magnets 25 left and right of the central position may have a trapezoidal shape. In some embodiments, all permanent magnets 25 may have a trapezoidal shape and the central position may be empty, if desired.

According to Figure 6C, permanent magnets 25 may be installed on rotor blades 10 on a magnet support 15f around the rotor center on each side of the rotor plane. During pitching, the pitch motion leads to concentric paths of permanent magnets 25 around pitch axis X.

According to Figure 6D, trapezoidal cross-section shape 26 of at least one permanent magnet 25 has outer section widths 26a and 26b, that may be defined by the maximum movement of rotor blades 10 and that may provide a constant overlap between electrically controlled magnets 24 and permanent magnets 25 in overlap area 22 during pitching.

If desired, trapezoidal cross-section shape 26 including outer section widths 26a, 26b may be selected based on the maximum pitch angle, the shape and/or size of electrically controlled magnets 24, the position of both magnets 24, 25 relative to pitch axis X or any deformations of the rotor blades other than the ones caused by the pitch angle adjustment, e.g., deformations caused by flapping or lead/lag moments.

Figures 7, 8A, 8B, and 9 illustrate an embodiment of rotor 8a with pitch control apparatus 20. Illustrated rotor blade 10 rotates around rotor axis Y and performs pitching around pitch axis X. Rotor axis Y and pitch axis X intersect in rotor center P₀.

As shown in Figure 7, rotor blade 10 has permanent magnets 25 that are arranged on magnet support 15f opposing electrically controlled magnets 24 of pitch control apparatus 20. Permanent magnets 25 and electrically controlled magnets 24 may form gap 21 between the spherical magnet surfaces 19, 15 that is constant during pitching, if desired.

Figure 8A illustrates that permanent magnets 25 are arranged on rotor blade 10 such that spherical magnet surface 19 is at first predetermined radius R₁ from rotor center P₀ inside rotor hub 9, and that electrically controlled magnets 24 are arranged on a rotating magnet surface (e.g., rotating outer circular wall 15a of Figure 3) or on a static, non-rotating magnet surface (e.g., non-rotating magnet surface 15g of Figure 4A) such that spherical magnet surface 15 is at second predetermined radius R₂ from rotor center P₀.

According to some embodiment, second predetermined radius R₂ is greater than first predetermined radius R₁. Thus, electrically controlled magnets 24 may be arranged along an inner surface of a circular wall (e.g., rotating outer circular wall 15a of Figure 3 or non-rotating magnet support 15g of Figure 4). When electrically controlled magnets 24 are located on the inner surface of a circular wall (e.g., on the inner surface of the rotating outer circular wall 15a of Figure 3 or on the inner surface of the non-rotating magnet support 15g of Figure 4), electrically controlled magnets 24 may not pull away from the magnet support due to centrifugal forces during rotation of the rotor blades around the rotor axis Y.

According to some embodiments, spherical magnet surface 19 may be arranged on an outer surface of magnet support 15f of rotor blade 10. If desired, spherical magnet surface 19 may be located in rotor hub 9.

According to some embodiments, electrically controlled magnets 24 on a circular wall (e.g., rotating outer circular wall 15a of Figure 3 or non-rotating magnet support 15g of Figure 4) are installed around the rotor center on at least a part of the inside of the outer circular wall.

Figure 8B illustrates that permanent magnets 25 are arranged on rotor blade 10 such that spherical magnet surface 19 is at first predetermined radius R₁ from rotor center P₀, and that electrically controlled magnets 24 are arranged on an outer surface of a circular wall (e.g., rotating outer circular wall 15a of Figure 3 or non-rotating magnet support 15g of Figure 4) such that spherical magnet surface 15 is at second predetermined radius R₂ from rotor center P₀.

According to Figure 8B, an embodiment of rotor 8a with pitch control apparatus 20 is illustrated in which first predetermined radius R₁ is greater than second predetermined radius R₂. In other words, spherical magnet surface 15 may be arranged closer to rotor center P₀ than spherical magnet surface 19.

According to some embodiments, electrically controlled magnets 24 may be arranged along an outer surface of a circular wall (e.g., rotating outer circular wall 15a of Figure 3 or non-rotating magnet support 15g of Figure 4). If desired, permanent magnets 25 may be located on magnet support 15f of rotor blade 10 outside of rotor hub 9.

Figure 9 illustrates the relationship between first distance D₁ from rotor axis Y and second distance D₂ from pitch axis X that define first predetermined radius R₁, as well as the relationship between third distance D₃ from rotor axis Y and fourth distance D₄ from pitch axis X that define second predetermined radius R₂. Preferably, the second and fourth distances D₂, D₄ are selected based on a predetermined pitch torque requirement for each rotor blade 10 of the at least two rotor blades 10 during pitching. The first and third distances D₁, D₃ are preferably selected based on a predetermined drive torque requirement for driving the rotor 8a.

According to some embodiments, spherical magnet surface 19 of permanent magnets 25 is arranged at first predetermined radius R₁ from rotor center P₀, and spherical magnet surface 15 of electrically controlled magnets 24 is arranged at second predetermined radius R₂ from rotor center P₀ in rotor hub 9.

According to some embodiments, second predetermined radius R₂ is greater than first predetermined radius R₁. As an example, electrically controlled magnets 24 may be arranged along an inner surface of a circular wall (e.g., rotating outer circular wall 15a of Figure 3 or non-rotating magnet support 15g of Figure 4).

According to some embodiments, electrically controlled magnets 24 on a circular wall (e.g., rotating outer circular wall 15a of Figure 3 or non-rotating magnet support 15g of Figure 4) are installed around the rotor center on at least a part of the circular wall.

According to some embodiments, the number, size, and/or strength of electrically controlled magnets 24 and the number, size, and/or strength of permanent magnets 25 for each blade 10 may be selected based on the absolute values of radii R₁ and R₂, the difference between radii R₁ and R₂, the length of the rotor blades, the maximum pitch angle, the required pitch frequency, the required circumferential pitch control resolution, the required torque to perform pitching of the rotor blades, etc.

According to some embodiments, rotorcraft 1 of Figure 1 may include rotor 8a with pitch control apparatus 20. If desired, pitch control apparatus 20 may be used for controlling the blade pitch in any thrust generating rotational system (e.g., ship propellers, helicopter rotors, etc.) or passively rotating system (e.g., fluid-driven turbines, rotors, or propellers such as wind turbines or water-submerged turbines that generate power from the movement of surrounding fluids, etc.).

It should be noted that the above-described embodiments are merely described for illustration purposes, but not in order to restrict the invention as claimed. Instead, multiple modifications and variations of the presented embodiments are possible and should, therefore, also being considered as part of the invention, as long as they fall within the scope of the appended claims.

For example, pitch control apparatus 20 of Figures 5A and 5B is shown with three permanent magnets 25 and three electrically controlled magnets 24. However, pitch control apparatus 20 of Figures 5A and 5B may have any number of permanent magnets 25 and/or any number of electrically controlled magnets. The number of permanent magnets 25 may be selected to be the same as, greater than, or smaller than the number of electrically controlled magnets 24, if desired. For example, pitch control apparatus 20 of Figures 5A and 5B may have one permanent magnet and one electrically controlled magnet, two permanent magnets and one electrical magnet, one permanent magnet and two electrically controlled magnets, etc. Furthermore, the size of the permanent magnets may be bigger or smaller than the size of the electrically controlled magnets in any dimension including in circumferential direction.

As another example, in Figure 5B, all permanent magnets 24 may be selected to have a rectangular shape, while the electrically controlled magnet 24 in the central position has an hourglass shape and the electrically controlled magnets 24 left and right of the central position have a trapezoidal shape.

As yet another example, electrically controlled magnets 24 may have any polygonal shape such as a rectangular shape, a pentagonal shape, a hexagonal shape, etc. or any rounded shape such as a round shape, an oval shape, an elliptical shape, etc., and the number, size, and shape of permanent magnets 25 may be selected based on the shape of the electrically controlled magnets 24.

Moreover, in Figures 6A and 6B, the dimensions of permanent magnets 25 and/or the dimensions of electrically controlled magnets 24 may be selected such that permanent magnets 25 completely overlap electrically controlled magnets 24 with a maximum lead/lag and/or flapping movement of the rotor blades. Alternatively, the dimensions and/or shapes of permanent magnets 25 and/or the dimensions and/or shapes of electrically controlled magnets 24 may be selected such that electrically controlled magnets 24 completely overlap permanent magnets 25 with a maximum lead/lag and/or flapping movement of the rotor blades.

If desired, some or all permanent magnets 25 in Figures 3, 4, 5A, 5B, 5C, 6A, 6B, 6C, 7, 8A, 8B, or 9 may be replaced by electrically controlled magnets 24. Moreover, figure 3 illustratively shows rotor hub 9, that is adapted for supporting at least two rotor blades 10. However, a rotor with a single rotor blade and an opposing counteracting balance weight is also possible.

Furthermore, the described and illustrated configurations of rotor 8a can be varied without influencing an underlying functionality thereof. In consequence, corresponding configurations of the rotor can be adapted as required, and so on.

### Reference List

- 1: rotorcraft
- 1a: main rotor
- 1b: fuselage aft section
- 2: fuselage
- 2a: tail boom
- 3: shroud
- 4: bumper
- 5: fin
- 5a: tail wing
- 5b: rudder
- 6: transverse duct
- 7: duct-type tail portion
- 8: counter-torque device
- 8a: rotor
- 8b: stator
- 9: rotor hub
- 9a: hub cover
- 10: rotor blades
- 11: drive shaft fairing
- 12: gearbox fairing
- 13: stator vanes
- 14: tail rotor drive shaft
- 15: second spherical magnet surface
- 15a: rotating outer circular wall
- 15b: inner circular wall
- 15c: bottom wall
- 15d: round apertures
- 15e: hub cover attachments
- 15f: magnet support on rotor blade
- 15g: non-rotating magnet support
- 16: central blade mount
- 17: splined central component
- 18: central flange
- 19: first spherical magnet surface
- 20: pitch control apparatus
- 21: gap
- 22: overlap area
- 23: hourglass cross-section shape
- 23a: middle section width
- 23b, 23c: outer section width
- 24: electrically controlled magnets
- 25: permanent magnet
- 26: trapezoidal cross-section shape
- 26a, 26b: outer section width
- P₀: rotor center
- D₁: first distance
- D₂: second distance
- D₃: third distance
- D₄: fourth distance
- R₁: first predetermined radius
- R₂: second predetermined radius
- X: pitch axis
- Y: rotor axis.

## Claims

1. A rotor (8a), comprising:
at least two rotor blades (10), wherein each rotor blade (10) of the at least two rotor blades (10) rotates around a rotor axis (Y) and performs pitching around a pitch axis (X), wherein the rotor axis (Y) and the pitch axis (X) intersect in a rotor center (P₀), **characterized in that** each rotor blade (10) comprises: at least one permanent magnet (25) having a first spherical magnet surface (19) arranged such that the first spherical magnet surface (19) has a first predetermined radius (R₁) from the rotor center (P₀); and
a pitch control apparatus (20) for controlling the pitching of the at least two rotor blades (10) that comprises electrically controlled magnets (24) having a second spherical magnet surface (15) arranged such that the second spherical magnet surface (15) has a second predetermined radius (R₂) from the rotor center (P₀); wherein the at least one permanent magnet (25) and the electrically controlled magnets (24) arranged opposing each other, form a gap (21) between the first spherical magnet surface (19) and the second spherical magnet surface (15), the gap (21) being constant during control of the pitching of the at least two rotor blades (10).

2. The rotor (8a) of claim 1,
wherein a first distance (D₁) from the rotor axis (Y) and a second distance (D₂) from the pitch axis (X) define the first predetermined radius (R₁), a third distance (D₃) from the rotor axis (Y) and a fourth distance (D₄) from the pitch axis (X) define the second predetermined radius (R₂).

3. The rotor (8a) of claim 2,
wherein the second and fourth distances (D₂), (D₄) are selected based on a predetermined pitch torque requirement for each rotor blade (10) of the at least two rotor blades (10) during pitching.

4. The rotor (8a) of claims 2 or 3,
wherein the first and third distances (D₁), (D₃) are selected based on a predetermined drive torque requirement for driving the rotor (8a).

5. The rotor (8a) of claims 2 or 3,
wherein the first predetermined radius (R₁) is greater than the second predetermined radius (R₂).

6. The rotor (8a) of claims 2 or 3,
wherein the second predetermined radius (R₂) is greater than the first predetermined radius (R₁).

7. The rotor (8a) of claims 2 or 3,
wherein the gap (21) between the first and second spherical magnet surfaces (19), (15) that is constant during pitching, is defined by an absolute value of a difference between the first and second predetermined radii (R₁), (R₂).

8. The rotor (8a) of claim 7,
wherein the constant gap (21) between the first and second spherical magnet surfaces (19), (15) ensures an overlapping magnetic field between the at least one permanent magnet (25) and the electrically controlled magnets (24).

9. The rotor (8a) of any one of the claims 1-8,
wherein the electrically controlled magnets (24) control the pitching of each rotor blade (10) of the at least two rotor blades (10) individually.

10. The rotor (8a) of any one of claims 1 to 3,
wherein the at least two rotor blades (10) rotate in a rotor plane and wherein each rotor blade (10) of the at least two rotor blades (10) comprises at least one first permanent magnet (25) of the at least one permanent magnet (25) on a first side of the rotor plane and at least one second permanent magnet (25) of the at least one permanent magnet (25) on a second side of the rotor plane that is opposite to the first side of the rotor plane.

11. The rotor (8a) of claim 10,
wherein the at least one first permanent magnet (25) and the at least one second permanent magnet (25) are installed on a magnet support (15f) around the rotor center (P₀) on each side of the at least two rotor blades (10) and move with the at least two rotor blades (10) around the pitch axis (X) during pitching.

12. The rotor (8a) of any one of claims 1 to 3,
wherein the at least one permanent magnet (25) of each rotor blade (10) overlaps with at least a portion of the electrically controlled magnets (24) in an overlap area (22), and wherein the overlap area (22) is constant during pitching of each rotor blade (10) of the at least two rotor blades (10).

13. The rotor (8a) of claim 12,
wherein the at least one permanent magnet (25) has an hourglass cross-section shape (23), wherein the hourglass cross-section shape (23) of the at least one permanent magnet (25) has a middle section width (23a) and an outer section width (23b, 23c) that is greater than the middle section width (23a), and wherein the middle section width (23a) is based on the width of the electrically controlled magnets (24), and the outer section width (23b, 23c) is based on a maximum movement of the at least one permanent magnet (25) during pitching.

14. The rotor (8a) of claim 12,
wherein the at least one permanent magnet (25) has a trapezoidal cross-section shape (26) wherein the trapezoidal cross-section shape (26) of the at least one permanent magnet (25) has a first outer section width (26b) and a second outer section width (26a) that is greater than the first outer section width (26b).

15. The rotor (8a) of any one of claims 1 to 3,
further comprising a rotor hub (9) having an outer circular wall (15a, 15g) and a central blade mount (16) that receives the at least two rotor blades (10), wherein the electrically controlled magnets (24) are arranged on the outer circular wall (15a, 15g).

16. The rotor (8a) of claim 15,
wherein the outer circular wall (15a, 15g) provides a static, non-rotating magnet support (15g).

17. A rotorcraft (1) with at least one rotor (8a) according to any one of the claims 1-16.

## Patentansprüche

1. Rotor (8a), umfassend:
mindestens zwei Rotorblätter (10), wobei jedes Rotorblatt (10) der mindestens zwei Rotorblätter (10) sich um eine Rotorachse (Y) dreht und eine Blattverstellung um eine Blattverstellachse (X) ausführt, wobei sich die Rotorachse (Y) und die Blattverstellachse (X) in einer Rotormitte (P0) schneiden,
**dadurch gekennzeichnet, dass** jedes Rotorblatt (10) umfasst:
mindestens einen Permanentmagneten (25) mit einer ersten sphärischen Magnetfläche (19), die so angeordnet ist, dass die erste kugelförmige Magnetfläche (19) von der Rotormitte (P0) aus einen ersten vorgegebenen Radius (R1) aufweist; und
eine Verstellsteuervorrichtung (20) zum Steuern des Blattverstellens der mindestens zwei Rotorblätter (10), die elektrisch gesteuerte Magnete (24) mit einer zweiten sphärischen Magnetfläche (15) umfasst, die so angeordnet ist, dass die zweite sphärische Magnetfläche (15) von der Rotormitte (P0) einen zweiten vorgegebenen Radius (R2) hat; wobei der mindestens eine Permanentmagnet (25) und die elektrisch gesteuerten Magnete (24), die einander gegenüberliegend angeordnet sind, einen Spalt (21) zwischen der ersten sphärischen Magnetfläche (19) und der zweiten sphärischen Magnetfläche (15) bilden, wobei der Spalt (21) während der Steuerung des Blattverstellens der mindestens zwei Rotorblätter (10) konstant ist.

2. Rotor (8a) nach Anspruch 1,
bei dem ein erster Abstand (D1) von der Rotorachse (Y) und ein zweiter Abstand (D2) von der Blattverstellachse (X) den ersten vorgegebenen Radius (R1) definieren und ein dritter Abstand (D3) von der Rotorachse (Y) und ein vierter Abstand (D4) von der Blattverstellachse (X) den zweiten vorgegebenen Radius (R2) definieren.

3. Rotor (8a) nach Anspruch 2,
bei dem der zweite und der vierte Abstand (D2), (D4) auf der Grundlage eines vorgegebenen Verstelldrehmomentbedarfs für jedes Rotorblatt (10) der mindestens zwei Rotorblätter (10) während des Blattverstellens ausgewählt sind.

4. Rotor (8a) nach Anspruch 2 oder 3,
bei dem der erste und der dritte Abstand (D1), (D3) auf der Grundlage eines vorgegebenen Antriebsdrehmomentbedarfs für den Antrieb des Rotors (8a) ausgewählt sind.

5. Rotor (8a) nach Anspruch 2 oder 3,
bei dem der erste vorgegebene Radius (R1) größer ist als der zweite vorgegebene Radius (R2).

6. Rotor (8a) nach Anspruch 2 oder 3,
bei dem der zweite vorgegebene Radius (R2) größer ist als der erste vorgegebene Radius (R1).

7. Rotor (8a) nach Anspruch 2 oder 3,
bei dem der während des Blattverstellens konstante Spalt (21) zwischen der ersten und der zweiten sphärischen Magnetfläche (19), (15) durch einen Absolutwert einer Differenz zwischen dem ersten und dem zweiten vorgegebenen Radius (R1), (R2) definiert ist.

8. Rotor (8a) nach Anspruch 7,
bei dem der konstante Spalt (21) zwischen der ersten und der zweiten sphärischen Magnetfläche (19), (15) ein überlappendes Magnetfeld zwischen dem mindestens einen Permanentmagneten (25) und den elektrisch gesteuerten Magneten (24) gewährleistet.

9. Rotor (8a) nach einem der Ansprüche 1-8,
bei dem die elektrisch gesteuerten Magnete (24) die Blattverstellung jedes Rotorblattes (10) der mindestens zwei Rotorblätter (10) einzeln steuern.

10. Rotor (8a) nach einem der Ansprüche 1 bis 3,
bei dem die mindestens zwei Rotorblätter (10) in einer Rotorebene rotieren und bei dem jedes Rotorblatt (10) der mindestens zwei Rotorblätter (10) mindestens einen ersten Permanentmagneten (25) des mindestens einen Permanentmagneten (25) auf einer ersten Seite der Rotorebene und mindestens einen zweiten Permanentmagneten (25) des mindestens einen Permanentmagneten (25) auf einer der ersten Seite der Rotorebene gegenüberliegenden zweiten Seite der Rotorebene umfasst.

11. Rotor (8a) nach Anspruch 10,
bei dem der mindestens eine erste Permanentmagnet (25) und der mindestens eine zweite Permanentmagnet (25) an einem Magnetträger (15f) um die Rotormitte (P0) herum auf jeder Seite der mindestens zwei Rotorblätter (10) installiert sind und sich mit den mindestens zwei Rotorblättern (10) während des Blattverstellens um die Blattverstellachse (X) bewegen.

12. Rotor (8a) nach einem der Ansprüche 1 bis 3,
bei dem der mindestens eine Permanentmagnet (25) jedes Rotorblatts (10) mit mindestens einem Teil der elektrisch gesteuerten Magnete (24) in einem Überlappungsbereich (22) überlappt, und bei dem der Überlappungsbereich (22) während des Blattverstellens jedes Rotorblatts (10) der mindestens zwei Rotorblätter (10) konstant ist.

13. Rotor (8a) nach Anspruch 12,
bei dem der mindestens eine Permanentmagnet (25) eine Sanduhr-Querschnittsform (23) aufweist, wobei die Sanduhr-Querschnittsform (23) des mindestens einen Permanentmagneten (25) eine Mittenquerschnittsbreite (23a) und eine Außenquerschnittsbreite (23b, 23c) aufweist, die größer ist als die Mittenquerschnittsbreite (23a), und wobei die Mittenquerschnittsbreite (23a) auf der Breite der elektrisch gesteuerten Magnete (24) basiert und die Außenquerschnittsbreite (23b, 23c) auf einer maximalen Bewegung des mindestens einen Permanentmagneten (25) während des Blattverstellens basiert.

14. Rotor (8a) nach Anspruch 12,
bei dem der mindestens eine Permanentmagnet (25) eine trapezförmige Querschnittsform (26) aufweist, wobei die trapezförmige Querschnittsform (26) des mindestens einen Permanentmagneten (25) eine erste Außenquerschnittsbreite (26b) und eine zweite Außenquerschnittsbreite (26a) aufweist, die größer als die erste Außenquerschnittsbreite (26b) ist.

15. Rotor (8a) nach einem der Ansprüche 1 bis 3, der ferner eine Rotornabe (9) mit einer äußeren Kreiswand (15a, 15g) und einer zentralen Blattaufnahme (16) umfasst, die die mindestens zwei Rotorblätter (10) aufnimmt, wobei die elektrisch gesteuerten Magnete (24) an der äußeren Kreiswand (15a, 15g) angeordnet sind.

16. Rotor (8a) nach Anspruch 15,
bei dem die äußere Kreiswand (15a, 15g) einen statischen, nicht rotierenden Magnetträger (15g) bildet.

17. Drehflügler (1) mit mindestens einem Rotor (8a) nach einem der Ansprüche 1-16.

## Revendications

1. Rotor (8a), comprenant :
au moins deux pales (10) de rotor, dans lequel chaque pale (10) de rotor desdites au moins deux pales (10) de rotor pivote autour d'un axe de rotor (Y) et effectue un changement d'angle d'attaque autour d'un axe d'attaque (X), dans lequel l'axe de rotor (Y) et l'axe d'attaque (X) se croisent dans un centre de rotor (P₀),
**caractérisé en ce que** chaque pale (10) de rotor comprend : au moins un aimant permanent (25) ayant une première surface sphérique (19) d'aimant agencée de façon que la première surface sphérique (19) d'aimant ait un premier rayon prédéterminé (R₁) par rapport au centre de rotor (P₀) ; et
un dispositif de commande d'attaque (20) pour commander le calage desdites au moins deux pales (10) de rotor qui comprend des aimants (24) commandés électriquement ayant une seconde surface sphérique (15) d'aimant agencée de façon que la seconde surface sphérique (15) d'aimant ait un second rayon prédéterminé (R₂) par rapport au centre de rotor (P₀) ; dans lequel ledit au moins un aimant permanent (25) et les aimants (24) commandés électriquement agencés face à face forment un espace (21) entre la première surface sphérique (19) d'aimant et la seconde surface sphérique (15) d'aimant ,l'espace (21) étant constant au cours de la commande de changement d'angle d'attaque desdites au moins deux pales (10) de rotor.

2. Rotor (8a) selon la revendication 1,
dans lequel une première distance (D₁) à partir de l'axe de rotor (Y) et une deuxième distance (D₂) à partir de l'axe d'attaque (X) définissent le premier rayon prédéterminé (R₁), une troisième distance (D₃) à partir de l'axe de rotor (Y) et une quatrième distance (D₄) à partir de l'axe d'attaque (X) définissent le second rayon prédéterminé (R₂).

3. Rotor (8a) selon la revendication 2,
dans lequel les deuxième et quatrième distances (D₂), (D₄) sont choisies sur la base d'un besoin prédéterminé en couple, lié à l'angle d'attaque pour chaque pale (10) de rotor desdites au moins deux pales (10) de rotor au cours du changement d'angle d'attaque.

4. Rotor (8a) selon les revendications 2 ou 3,
dans lequel les première et troisième distances (D₁), (D₃) sont choisies sur la base d'un besoin prédéterminé de couple lié à l'entrainement pour entrainer le rotor (8a).

5. Rotor (8a) selon les revendications 2 ou 3,
dans lequel le premier rayon prédéterminé (R₁) est plus grand que le second rayon prédéterminé (R₂).

6. Rotor (8a) selon les revendications 2 ou 3,
dans lequel le second rayon prédéterminé (R₂) est plus grand que le premier rayon prédéterminé (R₁).

7. Rotor (8a) selon les revendications 2 ou 3,
dans lequel l'espace (21) entre les première et seconde surfaces sphériques d'aimants (19), (15) qui est constant au cours du changement d'angle d'attaque, est défini par une valeur absolue d'une différence entre les premier et second rayons prédéterminés (R₁), (R₂).

8. Rotor (8a) selon la revendication 7,
dans lequel l'espace constant (21) entre les première et seconde surfaces sphériques d'aimants (19), (15) permet un chevauchement de champ magnétique entre ledit au moins un aimant permanent (25) et les aimants (24) commandés électriquement.

9. Rotor (8a) selon l'une quelconque des revendications 1-8,
dans lequel les aimants (24) commandés électriquement commandent individuellement le changement d'angle d'attaque de chaque pale (10) de rotor desdites au moins deux pales (10) de rotor.

10. Rotor (8a) selon l'une quelconque des revendications 1 à 3,
dans lequel lesdites au moins deux pales (10) de rotor pivotent dans un plan de rotor et dans lequel chaque pale (10) de rotor desdites au moins deux pales (10) de rotor comprend au moins un premier aimant permanent (25) parmi lesdits au moins un aimants permanents sur un premier côté du plan de rotor et au moins un second aimant permanent (25) parmi lesdits au moins un aimants permanents sur un second côté du plan de rotor qui fait face au premier côté de plan de rotor.

11. Rotor (8a) selon la revendication 10,
dans lequel ledit au moins un premier aimant permanent (25) et ledit au moins un second aimant permanent (25) sont intallés sur un support d'aimant (15f) autour du centre de rotor (P₀) de chaque côté desdites au moins deux pales (10) de rotor et se déplacent avec lesdites au moins deux pales (10) de rotor autour de l'axe d'attaque (X) au cours du changement d'angle d'attaque.

12. Rotor (8a) selon l'une quelconque des revendications 1 à 3,
dans lequel ledit au moins un aimant permanent (25) de chaque pale (10) de rotor chevauche au moins une partie des aimants (24) commandés électriquement dans une zone de chevauchement (22), et dans lequel la zone de chevauchement (22) est constante au cours du changement d'angle d'attaque de chaque pale (10) de rotor desdites au moins deux pales (10) de rotor.

13. Rotor (8a) selon la revendication 12,
dans lequel ledit au moins un aimant permanent (25) présente une section en forme de sablier (23), dans lequel la section en forme de sablier dudit au moins un aimant permanent (25) possède une largeur de partie centrale (23a) et une largeur de partie extérieure (23b, 23c) qui est plus grande que la largeur de partie centrale (23a), et dans lequel la largeur de partie centrale (23a) est basée sur la largeur des aimants (24) commandés électriquement, et la largeur de partie extérieure (23b, 23c) est basée sur un déplacement maximal dudit au moins un aimant permanent (25) au cours du changement d'angle d'attaque.

14. Rotor (8a) selon la revendication 12,
dans lequel ledit au moins un aimant permanent (25) présente une section de forme trapézoïdale (26) dans lequel la section de forme trapézoïdale (26) dudit au moins un aimant permanent (25) possède une première largeur de partie extérieure (26b) et une seconde largeur de partie extérieure (26a) qui est plus grande que la première largeur de partie extérieure (26b).

15. Rotor (8a) selon l'une quelconque des revendications 1 à 3,
comprenant en outre un moyeu de rotor (9) ayant une paroi circulaire extérieure (15a, 15g) et un support de pales central (16) qui accueille lesdites au moins deux pales (10) de rotor, dans lequel les aimants commandés électriquement (24) sont agencés sur la paroi circulaire extérieure (15a, 15g).

16. Rotor (8a) selon la revendication 15,
dans lequel la paroi circulaire extérieure (15a, 15g) comporte un support (15g) d'aimant non-pivotant et statique.

17. Giravion (1) avec au moins un rotor (8a) selon l'une quelconque des revendications 1-16.
